# FASCICULE DE BREVET EUROPEEN

(11) **EP 2 919 589 B1**
(45) Date de publication et mention de la délivrance du brevet: **30.10.2019**
(21) Numéro de dépôt: 13801669.6
(22) Date de dépôt: 14.11.2013
(51) Int. Cl.: A23G 3/34, A23G 3/42, A23G 3/38, A23G 3/48, A23L 29/212

(54) **CONFISERIE GÉLIFIÉE ET PROCÉDÉ DE PRÉPARATION D'UNE TELLE CONFISERIE**
GELIERTE SÜSSWARE UND VERFAHREN ZUR HERSTELLUNG SOLCH EINER SÜSSWARE
JELLY CONFECTION AND METHOD FOR PRODUCING SUCH A CONFECTIONARY PRODUCT

(30) Priorité: 14.11.2012 FR 1260847
(43) Date de publication de la demande: 23.09.2015
(73) Titulaire: Roquette Frères, 62136 Lestrem (FR)
(72) Inventeur: LAGACHE, Sylvie, F-59700 Marcq en Baroeul (FR); BRENDEL, Raymond, F-62400 Bethune (FR); GUERARD, Daniel, F-62400 Bethune (FR)
(74) Mandataire: Cabinet Plasseraud
(86) Numéro de dépôt international: PCT/FR2013/052748
(87) Numéro de publication internationale: WO 2014/076429

(56) Documents cités:
- EP-A1- 1 342 417
- US-A- 3 527 646
- US-A- 4 289 788
- US-A1- 2004 101 615

## Description

### DOMAINE DE L'INVENTION

La présente invention concerne une nouvelle confiserie gélifiée, plus particulièrement un bonbon tendre ou une pâte à mâcher comprenant un agent gélatinisant procurant aux dits bondons leur masticabilité. Plus particulièrement, la présente invention concerne une nouvelle confiserie gélifiée contenant peu ou pas de gélatine. La présente invention concerne également un procédé de préparation d'une telle confiserie.

### ARRIERE-PLAN TECHNOLOGIQUE

Les produits de confiserie sont nombreux. Ils ont tous en commun la cuisson du sucre et son mélange avec d'autres ingrédients pour obtenir des spécialités et des parfums différents. On entend par confiserie gélifiée au sens de la présente invention les gommes, pâtes à mâcher et les gelées, qui font partie des articles tendres par rapport aux sucres cuits, ainsi que les caramels, toffées, fudges, les lozenges (« pastilles »), les fondants et les fourrages contenant traditionnellement de la gélatine. Ces confiseries sont notamment constituées de sucres ou polyols, d'agents édulcorants, de matière grasse, d'agents émulsifiants, d'arômes, de colorants, d'acides et/ou de bases minérales et/ou organiques et leurs sels et d'un ou plusieurs hydrocolloïdes épaississants et/ou gélifiants d'origine végétale ou animale tels que la gomme arabique, la gélatine, la pectine, les carraghénanes, les alginates, les celluloses et l'amidon. Il n'existe pas de définitions précises de ces différentes confiseries gélifiées, que l'on peut classer arbitrairement en gommes dures et gommes tendres. Les gommes dures (" fruit gums ", " liquorice gums ", " pastilles ") sont par exemple les gommes aux fruits, à la menthe, à la réglisse. Ces gommes sont traditionnellement réalisées à base de gomme arabique et/ou d'amidon utilisée comme agent épaississant. Elles sont dures, peu collantes et se solubilisent lentement en bouche. Les gommes tendres regroupent les gelées et les gommes ("jelly beans", "wine gums"), traditionnellement préparées à base de gélatine et/ou amidon employée comme agent gélifiant et apportant l'élasticité requise pour ces articles tendres, de texture élastique à plastique. Les gommes tendres comprennent traditionnellement également les gelées à base de pectine et à base de carraghénanes ou d'agar-agar.

Les confiseries gélifiées, dures ou tendres, sont généralement fabriquées par cuisson d'un mélange comprenant en général un mélange de sucre(s) ou polyol(s) et de sirop de glucose ou de maltitol, ou plus généralement de sirop de glucose hydrogéné, auquel on ajoute après cuisson un agent épaississant ou gélifiant, des arômes, acides, colorants et édulcorants intenses. Le mélange cuit et aromatisé est ensuite généralement coulé dans des moules ou dans de l'amidon de coffrage, puis le plus souvent (mais pas forcément) étuvé de manière à obtenir un séchage et une prise du gel avant récupération de l'article final.

Les pâtes à mâcher sont obtenues par cuisson d'un mélange de sucre et de sirop de glucose auxquels a été ajoutée une faible quantité de matière grasse. La masse cuite est ensuite aérée pour l'alléger par l'un des procédés bien connu des confiseurs comme par exemple l'étirage, le battage, éventuellement sous pression, le mixage sous pression, l'extrusion. C'est cette aération et la présence de matières grasses qui donnent aux pâtes à mâcher leur texture caractéristique.

Les caramels, toffées, fudges, lozenges et fourrages contenant traditionnellement de la gélatine sont également concernés par la présente invention.

La composition des caramels, toffées, fudges peut varier dans une large mesure en fonction de l'intensité de couleur et de goût ainsi que de la texture recherchées. Généralement, l'humidité résiduelle de tels produits varie entre 3 et 10 %, le saccharose entre 30 et 60 %, le sucre inverti entre 1 et 10 %, le sirop de glucose (exprimé sur sec) entre 20 et 50 %, les matières grasses entre 1 et 15 %, le lactose entre 1 et 6 % et les protéines laitières entre 0,75 et 15 %.

Technologiquement, il est possible de classer ces spécialités en trois groupes principaux en fonction de leur teneur en humidité résiduelle et de leur texture. Les caramels durs ont une humidité résiduelle de 3 à 4 % et une texture dure et lisse, alors que les caramels mous/toffées ont une humidité relative de 7 à 10 % et une texture tendre et masticable, et les fudges ont une teneur en humidité résiduelle de 7 à 9 % pour une texture tendre mais courte. Les appellations « caramels (tendres ou durs) » et « toffées », accompagnées ou non d'un qualificatif, sont réservées à des confiseries préparées par cuisson du sucre, de glucose (ou de sucre inverti), de matières grasses alimentaires (graisse butyrique, graisse végétale et/ou graisse animale) et de protéines laitières, les matières grasses et les protéines laitières devant être en proportion telles que le produit fini contienne au minimum 6 % de matières grasses et 6 % de matières sèches provenant du lait.

Les fourrages gras sont tous les mélanges obtenus à partir de sucre, ou de tout autre édulcorant de masse comme par exemple les polyols, et de matières grasses végétales et/ou animales, qui contiennent traditionnellement des protéines laitières et qui sont destinés à être utilisés comme garniture de remplissage en confiserie, pâtisserie, boulangerie, biscuiterie et tout autre domaine alimentaire. De tels exemples sont par exemple des fourrages gras pralinés, des fourrages gras fantaisie « chocolat ».

La gélatine utilisée dans toutes ces confiseries gélifiées est une protéine animale extraite, après hydrolyse partielle, de matières premières riches en collagène extrait de la peau, des os, des cartilages, des ligaments, etc.

Trois matières premières sont utilisées de nos jours pour obtenir industriellement de la gélatine. Les couennes de porc qui sont toujours traitées par hydrolyse acide et qui conduisent à des gélatines de type A. Les peaux de bovins qui sont toujours traitées par hydrolyse alcaline et qui conduisent à des gélatines de type B. Les os qui peuvent être de type A ou B. Que l'hydrolyse ait été réalisée en milieu acide ou alcalin, la gélatine est ensuite extraite à l'eau chaude à des températures croissantes. Viennent ensuite des opérations de filtration, désionisation, concentration, stérilisation, gélification, extrusions, séchage et broyage permettant d'obtenir le produit fini.

Il existe également de la gélatine produite à partir de poissons, mais elle ne représente qu'un très faible pourcentage de la gélatine alimentaire fabriquée aujourd'hui en Europe (moins de 3%).

Une fois prête à l'emploi, la gélatine est une substance solide translucide, transparente ou légèrement jaune, possédant une odeur et un goût caractéristique..

Après dissolution dans l'eau chaude et refroidissement, la gélatine forme un gel colloïdal semi-solide qui présente de nombreux avantages pour des applications alimentaires :
- il est très clair, et cette transparence est recherchée notamment dans le secteur de la confiserie,
- il est réversible, c'est-à-dire qu'il fond lorsqu'il chauffe au-delà d'une température dite point de fusion qui se situe entre 27°C et 35°C, ce qui est intéressant lorsqu'on recherche une fusion en bouche.

La formation du gel va dépendre :
- de la gélatine elle-même (degré bloom),
- de la durée et de la température : le gel se forme immédiatement à 10°C, mais il faut environ 16 heures pour atteindre la gélification maximale,
- et de la concentration en gélatine : elle doit être de 0,8% au minimum pour qu'il y ait gélification, c'est ce qu'on appelle la concentration critique de gélification.

La gélatine est très utilisée dans le domaine de la confiserie. C'est son élasticité qui est très appréciée car elle procure une sensation très particulière à la mastication. Elle présente, en outre, d'excellentes aptitudes à libérer les arômes d'où son intérêt pour fabriquer de savoureuses confiseries. Enfin, elle est capable d'absorber cinq à six fois son poids en eau. Elle est donc très utilisée car elle possède de nombreux atouts fonctionnels. Elle est utilisée comme agent gélifiant en priorité, mais également comme agent épaississant, stabilisant, émulsifiant, liant et agent moussant dans les confiseries aérées.

Depuis de nombreuses années la gélatine n'a guère bonne presse. Suite à l'émergence de l'encéphalite spongiforme chez les bovins, l'utilisation de la gélatine dans des préparations alimentaires est aujourd'hui très controversée. De plus, dans le milieu de la confiserie, il n'y a que la gélatine issue de peaux de porcs qui est utilisée, ce qui peut également poser des problèmes par rapport à certaines croyances ou religions. Enfin, les végétariens et végétaliens refusent également de consommer tous produits issus d'animaux et boycottent par conséquent toutes les confiseries contenant de la gélatine.

De plus, en raison de son goût et de son odeur particulière, son utilisation contraint très souvent les industriels à utiliser des arômes afin de masquer sa présence et ses inconvénients olfactifs.

La gélatine a également un prix de revient élevé qui peut constituer un frein à son utilisation, notamment pour les pays émergents.

De plus, la gélatine est une protéine très sensible aux conditions de pH et de températures extrêmes (pH très acides, températures très élevées) dans lesquelles elle a tendance à se dégrader, perdant ainsi ses propriétés gélifiantes.

De très nombreux travaux de recherche ont été menés afin de proposer des solutions plus ou moins complexes pour substituer en totalité ou en partie la gélatine dans la fabrication des confiseries gélifiées. On connait en particulier des confiseries gélifiées à base d'amidons divers.

Par exemple, le document US 3218177 proposait, il y a plus de trente ans, d'utiliser des amidons riches en amylose et en particulier des amidons de maïs comme seul et unique agent épaississant. Seules des teneurs en amylose supérieures à 40% permettaient de préparer des confiseries satisfaisantes, mais de tels amidons nécessitaient des températures de cuisson très élevées, supérieures à 150°C (environ 165°C à 170°C pour une formule de gomme) et des pressions de vapeur très élevées, donc des appareillages spécifiques dont les confiseurs ne sont généralement pas équipés. De plus, les amidons riches en amylose rétrogradent fortement après cuisson, générant ainsi une perte de transparence, et posent des problèmes de viscosité à la coulée.

L'homme du métier sait par ailleurs que seule l'amylose joue le rôle de gélifiant, que l'amylopectine confère l'élasticité aux produits mais gélifie plus lentement et augmente beaucoup plus la viscosité à la coulée que l'amylose, que l'amylose donne des gels opaques alors que l'amylopectine donne des produits transparents.

Il a alors été proposé dans les documents EP 0 252 306 B1 et EP 0 360 046 B1 de mélanger différents amidons riches en amylose, modifiés ou non, de manière à en conjuguer les propriétés. Ces solutions nécessitent des mélanges de plusieurs amidons et ne sont pas forcément simples à mettre en oeuvre industriellement parlant.

Il était alors reconnu que seuls les amidons riches en amylose permettaient d'obtenir des confiseries de texture satisfaisante, proche des confiseries contenant de la gélatine, particulièrement lorsqu'elles contenaient un mélange d'amidon riche en amylose et d'amidon fluide à chaud. L'intérêt des amidons riches en amylose a par ailleurs été largement commenté dans le document « Confectionary manufacture and Marketing, Vol. 24, n° 6, 1987, pages 2, 4 et 6 ».

Le document EP 0 591 473 B1 décrit le mélange d'amidons de maïs standard fluidifié ou oxydé et d'amidon riche en amylose fluidifié en milieu acide. L'utilisation d'environ 1% d'amidons modifiés a également été décrite en toute généralité en association avec un mélange d'iota et de kappa carraghénanes dans le document WO 00/19836, les meilleurs résultats sont toutefois obtenus avec les systèmes gélifiants composés uniquement de carraghénanes. Ces systèmes se révèlent alors relativement couteux.

Le document EP 1 3 42 417 A, dont la Demanderesse est titulaire, décrit une confiserie gélifiée contenant un amidon waxy en association avec des carraghénanes. Les confiseries obtenues sont de qualité satisfaisante mais n'égalent pas les propriétés des confiseries obtenues avec de la gélatine, et la solution proposée impose l'utilisation de carraghénanes qui sont chers.

Enfin, le document EP 1 645 196 B dont la demanderesse est également titulaire décrit des confiseries gélifiées à base d'amidon de légumineuse fluidifié et stabilisé présentant une teneur en amylose bien particulière.

Toutes les voies proposées et décrites dans l'art antérieur pour remplacer en totalité ou en partie la gélatine dans des confiseries gélifiées ne permettent pas soit d'obtenir des textures comparables aux confiseries gélifiées standard contenant de la gélatine, soit d'utiliser un procédé de production simple, rapide et peu coûteux.

Qui plus est, un des problèmes majeurs auxquels sont confrontés les confiseurs lors de la fabrication de confiseries à l'amidon est l'évaporation de l'eau contenue dans le mélange cuit par étuvage desdites confiseries, qui se révèle bien souvent très longue, du fait que les amidons ne permettent une mise en oeuvre qu'à faible matière sèche. La réduction de ce temps d'étuvage est donc recherchée par les confiseurs.

La stabilité thermique des confiseries obtenues est aussi une des préoccupations majeures surtout lorsque celles-ci sont destinées aux pays chauds. La plus forte résistance à la fonte est alors recherchée pour s'assurer de la stabilité des confiseries dans le temps.

Il existait donc un besoin pour un amidon susceptible de remplacer totalement ou partiellement la gélatine dans les confiseries gélifiées, et capable de développer une viscosité faible à chaud, permettant ainsi de travailler à haute matière sèche et à une température de cuisson pas trop élevée, apte à former rapidement un gel, permettant un démoulage facile des articles, permettant lorsque qu'elle était nécessaire de supprimer l'étape d'étuvage préalable, et conférant aux confiseries les qualités recherchées qui sont : un aspect visuel satisfaisant, une absence de caractère collant soit en bouche soit dans l'emballage final, une texture en bouche la plus proche possible du témoin sans amidon, une stabilité satisfaisante vis à vis du durcissement ou de la fonte dans le temps.

### RESUME DE L'INVENTION

Forte de ce constat et après de nombreux travaux de recherche, la société Demanderesse a eu le mérite de répondre à toutes les exigences requises et a trouvé qu'un tel but pouvait être atteint dès lors que l'on utilise un amidon particulier comme agent épaississant ou gélifiant. Il est donc du mérite de la Demanderesse d'avoir découvert qu'un amidon waxy prégélatinisé pouvait, de façon surprenante et inattendue par rapport aux prérequis de l'art antérieur remplacer avantageusement la gélatine dans les confiseries gélifiées, tout en conservant les qualités organoleptiques, en particulier gustatives, olfactives, visuelles et tactiles, au moins équivalentes voire supérieures, à celles des confiseries traditionnelles contenant de la gélatine.

Ainsi il est divulgué l'utilisation d'un amidon waxy prégélatinisé pour substituer la gélatine dans des confiseries gélifiées traditionnellement réalisées avec de la gélatine. Malgré cette substitution, les confiseries conservent une texture, une masticabilité, une durée en bouche et une palatabilité au moins similaires, voire améliorées par rapport aux confiseries comprenant traditionnellement de la gélatine. La gélatine peut être substituée en partie ou en totalité.

La présente invention a pour objet une nouvelle confiserie gélifiée comprenant de 0,1% à 25% d'amidon waxy prégélatinisé, de préférence de 2% à 10%, de façon encore plus préférée 4% à 8%, et de 0,1% à 10%, de préférence de 2% à 10% de maltodextrines branchées, les pourcentages étant exprimés en poids par rapport au poids total de la confiserie.

En outre, la présente invention concerne également un procédé de préparation d'une telle confiserie.

### DESCRIPTION DETAILLEE DES MODES DE REALISATION

Il est divulgué l'utilisation d'un amidon waxy prégélatinisé présentant une teneur en amylopectine supérieure ou égale à 80% pour substituer partiellement ou totalement la gélatine dans des confiseries gélifiées traditionnellement réalisées avec de la gélatine.

Il est divulgué l'utilisation d'un amidon waxy prégélatinisé présentant une teneur en amylopectine supérieure ou égale à 90% pour substituer partiellement ou totalement la gélatine dans des confiseries gélifiées traditionnellement réalisées avec de la gélatine.

Il est divulgué l'utilisation d'un amidon waxy prégélatinisé présentant une teneur en amylopectine supérieure ou égale à 95% pour substituer partiellement ou totalement la gélatine dans des confiseries gélifiées traditionnellement réalisées avec de la gélatine.

La présente invention a pour objet une nouvelle confiserie gélifiée contenant peu ou pas de gélatine, caractérisée en ce qu'elle comprend un amidon waxy prégélatinisé ou précuit.

La présente invention concerne donc une nouvelle confiserie gélifiée comprenant de 0,1% à 25% d'amidon waxy prégélatinisé, de préférence de 2% à 10%, de façon encore plus préférée 4% à 8%, et de 0,1% à 10%, de préférence de 2% à 10% de maltodextrines branchées, les pourcentages étant exprimés en poids par rapport au poids total de la confiserie.

Selon la présente invention, l'expression « confiserie gélifiée » doit être interprétée comme désignant toutes les confiseries contenant habituellement de la gélatine. Il s'agit entre autre des gommes dures, des gommes tendres, des pâtes à mâcher, des réglisses, des gelées, des pastilles, des pâtes de fruits, des caramels, des toffées, des fondants, des fudges et des fourrages, des lozenges, ainsi que des inclusions pour crèmes glacées ou pâtisseries, ou encore toutes les confiseries du même type dites pharmaceutiques et contenant un principe actif par exemple. Tous ces articles font partie des articles tendres par rapport aux sucres cuits.

Dans un mode préféré de la présente invention, les confiseries gélifiées sont des pâtes à mâcher très appréciées par les consommateurs pour leur propriété de masticabilité importante les faisant se rapprocher d'un chewing gum ou d'une gomme à mâcher.

La demanderesse a eu le mérite de trouver que l'utilisation d'un amidon waxy prégélatinisé dans une formule de confiserie gélifiée contenant habituellement de la gélatine, permet de substituer partiellement ou totalement ce composé d'origine animale tout en permettant d'obtenir des confiseries possédant toutes les caractéristiques organoleptiques et physiques d'une confiserie gélifiée contenant de la gélatine.

L'amidon est la principale substance glucidique de réserve des végétaux supérieurs. C'est un homopolymère de D-glucose. L'amidon est composé de deux polymères de structure primaire différente : l'amylose, molécule essentiellement linéaire composée d'unités D-glucose liées entre elles par des liaisons de type αD(1,4) et l'amylopectine, molécule ramifiée où les unités D-glucose sont polymérisées par des liaisons αD(1,4) et sont reliées avec des branchements en αD(1,6). En fonction de son origine botanique, l'amidon présente des variations de composition, en particulier en ce qui concerne les pourcentages d'amylose et d'amylopectine. L'amylose représente 15 à 35% de la plupart des amidons. L'amylopectine est le constituant principal de la plupart des amidons et sa teneur varie de 65% à 100%. En effet, certaines variétés d'amidon, dites « waxy » sont constituées essentiellement d'amylopectine, de 95 à 100%. On les appelle également des amidons cireux.

Au sens de la présente invention, l'expression « amidon waxy » désigne toutes les variétés d'amidon contenant une teneur en amylopectine supérieure ou égale à 80%, de préférence supérieure ou égale à 90% et de façon encore plus préférée supérieure ou égale à 95%.

Au sens de la présente invention, ledit amidon waxy est issu d'une ou plusieurs variétés botaniques choisies parmi le maïs, le riz, la pomme de terre, le blé et leurs mélanges quelconques. Les variétés botaniques peuvent être, selon la présente invention, sauvages ou hybrides et donc avoir subis des modifications génétiques pour modifier leur génome.

Au sens de la présente invention, l'amidon waxy prégélatinisé est soit un amidon natif n'ayant subi aucune modification lors de son extraction ou soit un amidon dit modifié, c'est-à-dire ayant subi un moins un traitement choisi parmi les traitements physiques, chimiques ou enzymatiques, de façon à modifier sa structure de base.

Dans la présente invention, les termes « amidon prégélatinisé » et « amidon précuit » sont utilisés indifféremment pour désigner tout amidon ayant subi un traitement thermique en présence d'eau, de sorte qu'il perde dans sa quasi-totalité sa structure granulaire et qu'il devienne soluble dans l'eau froide.

Ledit amidon prégélatinisé ou précuit peut subir un traitement thermique préalablement à son utilisation dans un procédé de fabrication de confiseries, ou alors subir ledit traitement thermique au moment du procédé de fabrication des confiseries, par cuisson de ce dernier par exemple.

Ainsi par amidon prégélatinisé ou amidon précuit, on entend au sens de l'invention un état dans lequel l'amidon n'est quasiment plus dans un état granulaire, c'est-à-dire dans un état où il n'est plus dans un état en granules semi-cristallins caractéristiques de l'état dans lequel il est naturellement présent dans les organes et tissus de réserve des végétaux supérieurs, en particulier dans les graines de céréales, les graines de légumineuses, les tubercules de pomme de terre ou de manioc, les racines, les bulbes, les tiges et les fruits. Cet état semi-cristallin est essentiellement dû aux macromolécules d'amylopectine, l'un des deux constituants principaux de l'amidon. A l'état natif, les grains d'amidon présentent un taux de cristallinité qui varie de 15 à 45%, et qui dépend essentiellement de l'origine botanique et du traitement éventuel qu'il a subi. L'amidon granulaire, placé sous lumière polarisée, présente en microscopie une croix noire caractéristique, dite « croix de Malte ». Ce phénomène de biréfringence positive est dû à l'organisation semi-cristalline de ces granules : l'orientation moyenne des chaînes de polymères est radiale. Pour une description plus détaillée de l'amidon granulaire, on pourra se référer au chapitre II intitulé « Structure et morphologie du grain d'amidon » de S. Perez, dans l'ouvrage « Initiation à la chimie et à la physico-chimie macromoléculaires», Première Edition, 2000, Volume 13, pages 41 à 86, Groupe Française d'Etudes et d'Applications des Polymères.

L'état prégélatinisé de l'amidon s'obtient par cuisson d'amidon granulaire, par incorporation d'eau et par apport d'énergie thermique et mécanique. La déstructuration de l'état granulaire semi-cristallin de l'amidon conduit à des amidons prégélatinisés amorphes avec disparition de la croix de malte de polarisation.

Dans la présente invention, l'amidon prégélatinisé présente de préférence un taux de cristallinité inférieur à 15%, de préférence inférieur à 5% et plus préférentiellement encore inférieur à 1%, c'est-à-dire dans un état essentiellement amorphe.

Ce taux de cristallinité peut en particulier être mesuré par diffraction aux rayons X, comme décrit dans le brevet US 5 362 777 (colonne 9, lignes 8 à 24).

Selon un mode préférentiel de la présente invention, l'amidon prégélatinisé est avantageusement substantiellement dépourvu de grains d'amidon présentant, en microscopie sous lumière polarisée, une croix de malte, signe indicateur de la présence d'amidon granulaire semi-cristallin.

Les amidons prégélatinisés selon la présente invention peuvent être obtenus par traitement hydrothermique de gélatinisation d'amidons natifs, en particulier par cuisson vapeur, cuisson *jet-cooker,* cuisson sur tambour, cuisson dans des systèmes de malaxeur/extrudeuse ou microonde puis séchage, par exemple en étuve, par air chaud sur lit fluidisé, sur tambour rotatif, par atomisation, par extrusion ou par lyophilisation. De tels amidons présentent généralement une solubilité dans l'eau déminéralisée à 20°C supérieure à 5%, et plus généralement comprise entre 10 et 100%, et un taux de cristallinité en amidon inférieur à 15%, généralement inférieur à 5%, et le plus souvent inférieur à 1%, voire nul. A titre d'exemple, on peut citer les produits fabriqués et commercialisés par la Demanderesse sous le nom de marque PREGEFLO®.

Selon un mode préférentiel de l'invention, l'amidon utilisé pour la préparation dudit amidon prégélatinisé est un amidon natif, et n'a donc subi aucun traitement ou modification préalable.

L'utilisation d'un tel amidon permet d'obtenir des confiseries présentant toutes les propriétés des confiseries gélifiées traditionnellement fabriquées à partir de gélatine. En effet, ledit amidon permet entre autre :
- d'obtenir des sujets moulés, translucides et aux contours bien définis,
- d'assurer un rendu fidèle des couleurs et des arômes dans le produit final. Les caractéristiques organoleptiques et physiques dudit amidon se marient parfaitement avec les parfums sucrés et souvent acidulés des bonbons gélifiés,
- d'enrayer la recristallisation du sucre par sursaturation, et en tant que polymère anticristallisant en retenant une quantité d'eau suffisante dans le milieu,
- d'éviter le phénomène de cold flow, qui peut s'avérer dramatique,
- de conférer cette élasticité et cette consistance particulière qui rendent la mastication agréable.

En effet, et c'est l'une des particularités de la présente invention, grâce à l'utilisation d'un amidon waxy prégélatinisé il est possible d'obtenir des confiseries présentant une masticabilité identique voire supérieure aux confiseries gélifiées contenant traditionnellement de la gélatine. Habituellement la qualité finale des confiseries de l'art antérieur fabriquées en substituant partiellement ou totalement la gélatine par un amidon différent ou par des mélanges complexes d'hydrocolloïdes était toujours inférieure et l'on observait très souvent des défauts : soit les confiseries étaient trop dures, soit elles étaient trop molles, soit elles étaient très collantes, soit elles se délitaient très rapidement, souvent trop rapidement. Bref la texture obtenue n'était pas en phase avec les exigences des consommateurs.

La présente invention permet de surmonter tous ces défauts en proposant une solution qui assure l'obtention de confiseries gélifiées où la texture répond parfaitement aux exigences des consommateurs. Lesdites confiseries présentent une texture parfaite, élastique ni trop dure ni trop molle. De plus, le temps de masticabilité est augmenté et permet d'obtenir des confiseries qui ne se délitent pas trop vite lorsqu'elles sont consommées et qui permettent donc au consommateur d'avoir un temps de mastication tout à fait satisfaisant.

Il est particulièrement surprenant qu'un amidon waxy prégélatinisé, riche en amylopectine puisse convenir à la substitution partielle ou totale de la gélatine dans des confiseries gélifiées. Ceci va en effet à l'encontre de tous les préjugés jusqu'ici formulés pour ce type d'amidons, qui étaient décrits jusqu'alors comme ayant des propriétés plutôt proches de la gomme arabique, alors que les amidons riches en amylose sont connus pour avoir des propriétés proches de celles de la gélatine. On peut citer à cet effet le document « The European Food and Drink Review - Autumn 1998, p 57-60. »

Il s'agit donc là d'une vraie prouesse technique de la part de la société demanderesse.

Ainsi, selon la présente invention, l'utilisation d'un amidon waxy prégélatinisé est notamment utile pour la substitution partielle ou totale de la gélatine dans des confiseries gélifiées de type gommes dures (" fruit gums ", " liquorice gums ", " pastilles ") et gommes tendres (regroupant les gelées et les gommes ("jelly beans", "wine gums")). Etant donné que ces confiseries contiennent traditionnellement un ou plusieurs hydrocolloïdes épaississants et/ou gélifiants d'origine végétale ou animale tels que la pectine, les carraghénanes, les alginates, les celluloses et l'amidon, la présente invention couvre également le mélange d'un amidon waxy prégélatinisé avec un ou plusieurs hydrocolloïdes épaississants et/ou gélifiants d'origine végétale ou animale.

Selon un mode de réalisation de la présente invention, ledit amidon waxy prégélatinisé est mélangé à des carraghénanes.

Selon la présente invention, la confiserie gélifiée comprend un mélange d'un amidon waxy prégélatinisé et d'une fibre végétale soluble.

Selon ce mode de réalisation, la confiserie comprenant de 0,1% à 75% de fibre, de préférence de 2% à 10%, de façon encore plus préférée 4% à 8%, les pourcentages étant exprimés en poids par rapport au poids total de la confiserie.

Dans un mode de réalisation avantageux de la présente invention, la confiserie comprend de 50 à 75% de fibre, de préférence de 56 à 62%. Dans ce mode de réalisation avantageux, la mention « riches en fibres » ou « source de fibres » peut être apposée sur l'emballage de ladite confiserie. Ce qui représente un avantage nutritionnel et marketing supplémentaire. Ceci est démontré ci-après dans l'exemple 4.

Ladite fibre soluble végétale est choisie dans le groupe constitué par les maltodextrines branchées.

Par fibre soluble, on entend des fibres solubles dans l'eau. Les fibres peuvent être dosées selon différentes méthodes AOAC. On peut citer à titre d'exemple, les méthodes AOAC 997.08 et 999.03 pour les fructanes, les FOS et l'inuline, la méthode AOAC 2000.11 pour le polydextrose, la méthode AOAC 2001.03 pour le dosage des fibres contenues dans les maltodextrines branchées et les dextrines indigestibles ou la méthode AOAC 2001.02 pour les GOS ainsi que les oligosaccharides solubles issus de plantes oléagineuses ou protéagineuses. Parmi les oligosaccharides solubles issus de plantes oléagineuses ou protéagineuses, on peut citer les oligosaccharides de soja, de colza ou de pois.

Selon la présente invention, la confiserie gélifiée comprend un mélange d'un amidon waxy prégélatinisé et des fibres végétales solubles qui sont des maltodextrines branchées.

On entend par maltodextrines branchées (MDB), les maltodextrines spécifiques identiques à celles décrites dans le brevet EP 1.006.128-B1 dont la Demanderesse est titulaire. Ces MDB ont l'avantage de représenter une source de fibres indigestibles bénéfiques pour le métabolisme et pour l'équilibre intestinal.

Selon la présente invention, lesdites maltodextrines branchées sont caractérisées en ce qu'elles présentent:
- entre 15 et 50% de liaisons glucosidiques 1-6, préférentiellement entre 22% et 45%, plus préférentiellement entre 20% et 40%, et encore plus préférentiellement entre 25% et 35%,
- une teneur en sucres réducteurs inférieure à 20%, préférentiellement comprise entre 2% et 20%, plus préférentiellement entre 2,5% et 15%, et encore plus préférentiellement entre 3,5% et 10%,
- un indice de polymolécularité inférieur à 5, préférentiellement compris entre 1 et 4, plus préférentiellement entre 1,5 et 3, et
- une masse moléculaire moyenne en nombre Mn inférieure à 4500 g/mole, préférentiellement comprise entre 400 et 4500 g/mole, plus préférentiellement entre 500 et 3000 g/mole, encore préférentiellement entre 700 et 2800 g/mole, encore plus préférentiellement comprise entre 1000 et 2600 g/mole.

En particulier, on pourra utiliser des MDB présentant entre 15 et 35% de liaisons glucosidiques 1-6, une teneur en sucres réducteurs inférieure à 20%, une masse moléculaire moyenne en poids MW comprise entre 4000 et 6000 g/mole et une masse moléculaire moyenne en nombre Mn comprise entre 250 et 4500 g/mole. Certaines sous-familles de MDB décrites dans la susdite demande peuvent aussi être utilisées conformément à l'invention. Il s'agit par exemple de MDB de hauts poids moléculaires présentant une teneur en sucres réducteurs au plus égale à 5 et un Mn compris entre 2000 et 4500 g/mole. Les MDB de bas poids moléculaires présentant une teneur en sucres réducteurs comprise entre 5 et 20% et une masse moléculaire Mn inférieure à 2000 g/mole peuvent également être employées.

Dans un autre mode de réalisation avantageux de la présente invention, on pourra également utiliser, conformément à l'invention, les maltodextrines hyperbranchées hypo-glycémiantes décrites dans la demande FR 1251810 dont la Demanderesse est titulaire.

Dans la présente demande, les pyrodextrines désignent les produits obtenus par chauffage de l'amidon amené à faible taux d'humidité, en présence de catalyseurs acides ou basiques, et présentant généralement un poids moléculaire compris entre 1000 et 6000 daltons. Ce grillage à sec de l'amidon, le plus couramment en présence d'acide, entraîne à la fois une dépolymérisation de l'amidon et un réarrangement des fragments d'amidon obtenus, conduisant à l'obtention de molécules très ramifiées. Cette définition vise en particulier les dextrines dites indigestibles, d'un poids moléculaire moyen de l'ordre de 2000 daltons.

Le polydextrose est une fibre soluble produite par polymérisation thermique du dextrose, en présence de sorbitol et d'acide comme catalyseur. Un exemple d'un tel produit est par exemple le LITESSE® commercialisé par DANISCO.

Selon un mode particulièrement avantageux de la présente invention, la confiserie gélifiée comprend du NUTRIOSE®, qui est une gamme complète de fibres solubles, reconnues pour leurs bienfaits, et fabriquées et commercialisées par la Demanderesse. Les produits de la gamme NUTRIOSE® sont des dérivés d'amidon de blé ou de maïs partiellement hydrolysés, qui contiennent jusqu'à 85 % de fibre. Cette richesse en fibre permet d'augmenter la tolérance digestive, d'améliorer la gestion de calorie, de prolonger le dégagement d'énergie et d'obtenir un taux de sucre inférieur. De plus, la gamme NUTRIOSE® est l'une des fibres les mieux tolérées disponibles sur le marché. Elle montre une tolérance digestive plus élevée, permettant une meilleure incorporation que d'autres fibres, ce qui représente de vrais avantages alimentaires.

Les intérêts d'ajouter des fibres et plus particulièrement des maltodextrines branchées comme le NUTRIOSE® à la confiserie gélifiée de la présente invention sont multiples. Outre l'aspect nutritif et l'apport de fibres très bien tolérées par l'organisme, l'ajout de ces fibres présente également un intérêt technique non négligeable. En effet, ces fibres sont constituées de longues chaines polymériques glucidiques et jouent donc un rôle comme agent texturant dans les confiseries. La présence de fibres permet donc encore d'augmenter l'élasticité du produit final. Ainsi, la durabilité de la masticabilité est augmentée par la présence de ces longues chaines qui modifient la texture du produit. Leur caractère branché diminue considérablement et avantageusement leur tendance à rétrograder, ce qui permet d'envisager leur utilisation dans les confiseries gélifiées ou l'absence de rétrogradation est nécessaire, en particulier lors d'un stockage prolongé.

Qui plus est, il semble que lesdites fibres aient un pouvoir non négligeable sur la rétention d'eau au sein de la confiserie. Ainsi, la présence de ces fibres dans la confiserie gélifiée selon l'invention peut permettre de diminuer l'activité de l'eau au sein de cette confiserie et donc de limiter voire éviter totalement les phénomènes de « cold flow » observés lors de la fabrication des pâtes à mâcher ou des caramels par exemple.

**La présence de maltodextrines branchées permet d'éviter les phénomènes de « cold flow** » **rencontrés dans les confiseries gélifiées fabriquées par coulage sur une table de refroidissement après cuisson de tous les ingrédients. Dans ce type de procédé de fabrication, le phénomène de « cold flow** » **peut être observé. Il s'agit de la** capacité de la pâte à mâcher ou du caramel à se déformer sans qu'il n'y ait de force appliquée. C'est donc sous l'effet de son propre poids que la confiserie aura tendance à couler et à s'écraser. Ceci est un défaut que les confiseurs cherchent absolument à éviter.

La présence de maltodextrines branchées permet également d'augmenter la température de transition vitreuse ou Tg de la partie amorphe de ladite confiserie. Cette augmentation de la Tg permet de rigidifier la structure au sein de la confiserie et permet par conséquent d'apporter une bonne tenue à la masticabilité.

Selon un autre mode de réalisation avantageux de la présente invention, la confiserie gélifiée comprend un mélange d'un amidon waxy prégélatinisé et d'un agent régulateur ou dépresseur d'activité de l'eau choisi parmi le sorbitol, la glycérine et leurs mélanges quelconques.

Selon ce mode de réalisation, la confiserie comprend de 0,1% à 15% d'un agent régulateur ou dépresseur d'activité de l'eau, de préférence de 1% à 8%, de façon encore plus préférée 2% à 6%, les pourcentages étant exprimés en poids par rapport au poids total de la confiserie.

Selon un mode préférentiel, l'agent régulateur ou dépresseur d'activité de l'eau est le sorbitol.

Selon un mode particulièrement avantageux de la présente invention, la confiserie gélifiée comprend un mélange d'un amidon waxy prégélatinisé, d'une fibre végétale soluble et d'un agent régulateur ou dépresseur d'activité de l'eau.

Selon un mode encore plus avantageux de la présente invention, la confiserie gélifiée comprend un mélange d'un amidon waxy prégélatinisé, de maltodextrines branchées et de sorbitol.

Selon un autre mode particulièrement avantageux, la présente invention concerne une confiserie gélifiée caractérisée en ce qu'elle comprend un mélange de :
- 0,1% à 25%, de préférence de 2% à 10%, de façon encore plus préférée 4% à 8% d'un amidon waxy prégélatinisé, et de
- 0,1% à 10% de maltodextrines branchées, de préférence de 2% à 10%, de façon encore plus préférée 4% à 8%, et de
- 0,1% à 15% d'un agent régulateur ou dépresseur d'activité de l'eau choisi parmi le sorbitol, la glycérine et leurs mélanges quelconques, de préférence de 1% à 8% de sorbitol.

Le sorbitol est un polyol très connu obtenu par hydrogénation du glucose. Il est caractérisé par ses propriétés technologiques et nutritionnelles. Il possède un pouvoir stabilisant et humectant, permettant d'abaisser l'activité de l'eau des produits finis.

L'activité de l'eau ou aw (« activity water ») représente la quantité d'eau libre disponible au sein d'un aliment pour d'éventuelles réactions biochimiques ultérieures. Elle ne représente pas la teneur en eau (ou humidité) mais bien la disponibilité de cette eau. De plus, elle détermine directement les propriétés physiques, mécaniques, chimiques et microbiologiques de nombreuses substances, telles que entre autre la fluidité, la coagulation, la cohésion et l'électricité statique. La capacité de conservation des aliments, la stabilité des couleurs, du goût, la teneur en vitamines, l'arôme et les conditions favorables à la formation de moisissures et à la croissance des microbes sont directement influencés par la valeur aw.

Ainsi, le fait de rajouter du sorbitol permet de baisser l'aw dans les confiseries gélifiées de la présente invention, et permet donc de préserver la texture élastique et la masticabilité desdites confiseries en stabilisant l'eau qu'elles contiennent.

En effet, les confiseries de la présente invention possèdent la particularité d'avoir une aw inférieure à l'aw traditionnellement mesurée dans des confiseries gélifiées contenant habituellement de la gélatine.
Selon la présente invention, l'aw des confiseries gélifiées est inférieure à 0,8. Selon un mode préféré, l'activité de l'eau des confiseries gélifiées selon l'invention est inférieure à 0,7.

La mesure de l'activité de l'eau est un paramètre défini et validé par l'USP 1112 (United States Phamacopeia).
Dans l'industrie agroalimentaire la valeur de l'activité de l'eau (aw) désigne un équilibre d'humidité défini par la pression partielle de la vapeur d'eau à la surface du produit. Cette activité dépend de la composition, de la température et de la quantité d'eau présente dans le produit. L'activité de l'eau donne des informations sur la stabilité physique, mécanique, chimique et microbiologique d'un produit ; elle influence le taux de croissance des organismes indésirables comme bactéries ou champignons, lesquels produisent des "toxines" ou d'autres substances nocives. Elle influe aussi sur d'autres réactions chimiques/biochimiques (par exemple la réaction Maillard) qui se produisent en fonction du taux disponible d'eau libre.
Fondamentalement, les caractéristiques suivantes d'un produit alimentaire dépendent de l'aw :
- les caractéristiques biologiques du produit, c'est-à-dire sa stabilité biologique, i.e., la croissance des micro-organismes,
- le pourcentage de protéines et de vitamines,
- des caractéristiques telles que la couleur, l'odeur, le goût et la valeur nutritive,
- la stabilité chimique de la composition,
- la réaction à l'humidité ambiante et la température,
- la solubilité ou la texture,
- la durabilité, c'est-à-dire la conservation dans le temps.

Pour déterminer l'activité de l'eau (valeur aw) il faut utiliser des instruments de laboratoire spécifiques à la mesure l'humidité de l'air, directement au-dessus d'un échantillon dans une chambre de mesure fermée après avoir obtenu l'équilibre d'humidité (Equilibrium). L'humidité de l'air est proportionnelle à la valeur aw. Une mesure fiable et pertinente est possible à la condition que les échantillons aient une température constante et que l'équilibre d'humidité soit définitif. La mesure de l'activité de l'eau nécessite un certain temps, lequel dépend des propriétés physico-chimiques des échantillons, ce temps ne peut pas être raccourci.

Pour mesurer l'humidité de l'air au-dessus de l'échantillon il y a 3 méthodes. Cependant, la technologie électrolytique-résistive est la plus indiquée au regard de sa précision, sa reproductibilité et sa maintenance.

On peut par exemple utiliser un appareil de type LabMaster NOVASINA, commercialisé par la société NOVASINA AG, Lachen, Suisse.

L'échantillon d'essai est placé dans une chambre de mesure complètement hermétique et à température stabilisée par effet Peltier. Pendant la mesure, l'échantillon humidifie ou déshumidifie le volume de l'air à l'intérieur de la chambre. Cela caractérise l'eau libre.

Cet échange a lieu jusqu'à ce que la saturation de la pression partielle soit égale à zéro. Une unité de mesure très précise d'humidité et de température détermine les conditions d'humidité dans la chambre de mesure. Si ces paramètres demeurent stables sur une période réglable par l'utilisateur, le logiciel de l'appareil détermine la valeur d'aw.

Une autre propriété particulièrement intéressante de la présente invention est que les différents constituants utilisés (à savoir l'amidon waxy prégélatinisé, les maltodextrines branchées et le sorbitol) n'ont pas besoin d'être hydratés avant leur incorporation, à la différence de la gélatine. Leur utilisation est donc plus simple. Par ailleurs, cette étape d'hydratation de la gélatine était une étape critique du procédé de fabrication des confiseries car elle comporte un risque important d'introduction de bactéries dans les préparations. En effet, la gélatine est un excellent support de développement des bactéries.

Les confiseries selon la présente invention se trouvent donc être également plus hygiéniques car moins chargées en bactéries.

La confiserie gélifiée selon la présente invention comprend en outre de 0 à 8% de gélatine exprimé en poids total de la confiserie selon que l'on souhaite substituer tout ou partie de cette dernière.

Selon un mode préféré de la présente invention, la confiserie gélifiée ne contient pas de gélatine et la substitution est donc totale.

La confiserie selon la présente invention est une confiserie avec ou sans sucre. Selon un mode préféré, il s'agit d'une confiserie exempte de gélatine.

Selon un mode préféré de l'invention, il s'agit d'une confiserie sans sucre et sans gélatine.

Selon la présente invention, lorsque les confiseries sont réalisées avec du sucre (saccharose) et du sirop de glucose, la demanderesse a remarqué qu'il était particulièrement important de respecter un ratio bien précis entre ces deux constituants, de manière à apporter à la confiserie une excellente élasticité mais également une très bonne plasticité. En effet, le sirop de glucose, issu de l'hydrolyse de l'amidon, est connu comme empêchant la cristallisation du sucre, et par conséquent la teneur en sirop de glucose est un facteur clé dans les confiseries, et plus particulièrement dans les confiseries de type gélifiées.

Ainsi, le ratio sucre/sirop de glucose est compris entre 20/80 et 60/40.

Selon un mode préféré, le ratio sucre/sirop de glucose est compris entre 25/75 et 50/50.

Dans la présente invention, on entend par « hydrolyse de l'amidon » tout procédé d'hydrolyse acide ou enzymatique d'amidon de légumineuses, de céréales ou de tubercules. Divers procédés d'hydrolyse sont connus et ont été décrits de manière générale aux pages 511 et 512 de l'ouvrage Encyclopedia of Chemical Technology de Kirk-Othmer, 3ème Edition, Vol. 22, 1978. Ces produits d'hydrolyse se définissent également comme des mélanges purifiés et concentrés formés de chaînes linéaires constituées d'unités D-glucose et de polymères de D-glucose essentiellement lié en α (1→4) avec seulement de 4 à 5 % de liaisons glucosidiques ramifiées α(1→6), de poids moléculaires extrêmement variés, complètement solubles dans l'eau. Les hydrolysats d'amidon sont très bien connus et parfaitement décrits dans Encyclopedia of Chemical Technology de Kirk-Othmer, 3ème Edition, Vol. 22, 1978, pp. 499 à 521.

Dans la présente demande, les sirops de glucose sont les produits d'hydrolyse de l'amidon possédant un DE (Dextrose Equivalent) supérieur à 20. Traditionnellement, la distinction entre les produits d'hydrolyse de l'amidon repose principalement sur la mesure de leur pouvoir réducteur, exprimé classiquement par la notion de Dextrose Equivalent ou DE. Le DE correspond à la quantité de sucres réducteurs, exprimée en équivalent dextrose pour 100g de matière sèche du produit. Le DE mesure donc l'intensité de l'hydrolyse de l'amidon, puisque plus le produit est hydrolysé, plus il contient de petites molécules (telles que le dextrose et le maltose par exemple) et plus son DE est élevé. Au contraire, plus le produit contient de grandes molécules (polysaccharides), plus son DE est bas.

De tels produits sont parfaitement connus de l'homme du métier et sont par exemple les sirops de glucose commercialisés par la Demanderesse sous la dénomination «Roquette sirops de glucose», et par exemple le sirop Roquette sirop de glucose 4779, signifiant qu'il possède un DE de 47 et une matière sèche de 79%.

D'un point de vue réglementaire et également au sens de la présente invention, les sirops de glucose ont une matière sèche au moins équivalente à 70%

Selon la présente invention, les confiseries gélifiées peuvent également comprendre de la gomme arabique. La gomme arabique est un mélange complexe et variable d'oligosaccharides, de polysaccharides et de glycoprotéines d'arabinogalactane. Selon la source, les composants de glycan contiennent une plus grande proportion de L-arabinose relatif aux D-galactose (acacia seyal) ou de D-galactose relatif aux L-arabinose (acacia Sénégal). La gomme de l'acacia seyal contient également significativement plus d'acide 4-O-methyl-D-glucuronic mais de moins de L-rhamnose et d'acide D-glucuronique non substitué que l'acacia Sénégal.
Son rôle en confiserie est de jouer sur la texture et d'apporter plus ou moins d'élasticité à la confiserie dans laquelle elle est utilisée. Elle permet par exemple d'allonger la masticabilité de la confiserie dans laquelle elle est utilisée, c'est-à-dire le temps nécessaire qu'il faut pour mâcher la confiserie jusqu'à son délitement total. Bien que son utilisation présente des avantages, elle n'est dans la présente invention pas obligatoire.

La confiserie gélifiée selon la présente invention comprend donc en outre de 0 à 8% de gomme arabique exprimé en poids total de la confiserie.

Selon un mode de réalisation de l'invention, la confiserie gélifiée est une confiserie avec ou sans sucre, sans gélatine et sans gomme arabique.
Les confiseries gélifiées selon l'invention peuvent également contenir un ou plusieurs agents édulcorants. On peut utiliser divers édulcorants, tels que sucres ou polyols, sous forme de poudre ou de sirop. Les sucres sont choisis dans le groupe constitué par les monosaccharides, les disaccharides, les trisaccharides, les oligo et polysaccharides comme par exemple les sirops de glucose, de glucose-fructose, de fructose-glucose, les sirops de glucose riches en maltose, le saccharose, le fructose, le maltose, le tréhalose, le mannose, le dextrose, le tagatose ou l'isomaltulose, seuls ou en mélange entre eux. Les polyols sont préférentiellement choisis dans le groupe constitué par le maltitol, le mannitol, l'érythritol, le xylitol, l'iditol, les sirops de maltitol, l'isomalt, le lactitol, les sirops de glucose hydrogénés, seuls ou en mélange entre eux. On peut également utiliser toute sorte d'édulcorants intenses comme par exemple la saccharine, l'aspartame ou l'acésulfame K, utilisés seuls ou en mélanges synergiques.

Avantageusement, le sorbitol n'est pas utilisé en tant qu'agent édulcorant dans la confiserie selon l'invention.

Dans un mode de réalisation particulier, l'agent édulcorant est choisi parmi la saccharine, l'aspartame, l'acésulfame K, le mannitol, le xylitol, le maltitol, le mannitol, l'érythritol, le xylitol, l'iditol, l'isomalt et le lactitol.

Selon l'invention, l'agent édulcorant représente de préférence 25 à 85%, de préférence 40 à 85% et plus préférentiellement de 60 à 85% en poids total de la confiserie.

Les confiseries gélifiées selon l'invention peuvent également comprendre un ou plusieurs composés choisis parmi les sucres non réducteurs, les matières grasses, les agents émulsifiants, les agents conservateurs, les agents foisonnants, les agents moussants, les agents gélifiants, les agents humectants, les acidifiants, les arômes naturel ou synthétiques, les exhausteurs de goût, les vitamines, les actifs pharmaceutiques, les minéraux tels que calcium, magnésium et autres suppléments alimentaires tels que par exemple le DHA, les colorants naturels ou synthétiques, les sels, les acides, ou divers éléments destinés soit à améliorer la qualité, soit à aromatiser la composition tels que les fruits secs, les fruits confits, les fruits séchés ou autrement transformés (pressés, concentrés, en poudre), ainsi que les purées de fruits, pulpes de fruits, qui sont généralement présents dans ladite confiserie à hauteur de 0 à 30% en poids par rapport au poids total de la confiserie.

En outre, la présente invention a pour objet un procédé de préparation de confiseries gélifiées caractérisé en ce qu'il comprend les étapes de :
- préparation d'un mélange comprenant 0,1% à 25%, de préférence de 2% à 10%, de façon encore plus préférée 4% à 8% d'un amidon waxy prégélatinisé, et de 0,1% à 10% de maltodextrines branchées, et de 0,1% à 15% d'un agent régulateur ou dépresseur d'aw, choisi parmi le sorbitol, la glycérine et leurs mélanges quelconques, au moins un édulcorant autre que le sorbitol, et de l'eau,
- la cuisson du mélange à une température comprise entre 100 et 150°C jusqu'à l'obtention de la matière sèche voulue,
- la mise en forme du mélange cuit de manière à obtenir des confiseries de type gélifié,
- la récupération des confiseries gélifiées ainsi obtenues.

Selon l'invention, on peut tout à fait envisager de cuire l'amidon séparément puis d'y ajouter les autres ingrédients, ou de préchauffer l'édulcorant avant d'y ajouter l'amidon, mais pour une fabrication en continu, on préfère disperser les édulcorants, l'amidon, les fibres et l'agent réducteur ou dépresseur d'aw dans une cuve de mélange, préchauffer ce mélange à environ 70-80°C pour dissoudre les édulcorants, cuire le mélange sur cuiseur haute pression à une température comprise entre 100 et 150°C suivant la texture souhaitée et le type de confiserie préparée, puis ajouter la matière grasse, l'émulsifiant le ou les agents foisonnants, les arômes, les colorants, les principes actifs, et les édulcorants intenses. La température de cuisson doit être suffisante pour cuire l'amidon (supérieure à 120°C), sauf dans le cas où on choisit de cuire l'amidon à part, puisque dans ce cas l'édulcorant peut être cuit seul à environ 110°C avant incorporation de l'amidon cuit à part. En tout état de cause, la température de cuisson du mélange est inférieure ou égale à 150°C, ce qui constitue un des avantages de la présente invention. La durée de cuisson dépend du matériel utilisé.

La cuisson peut être effectuée sur des cuiseurs à double enveloppe à pression atmosphérique, sous vide partiel ou total ou sous pression, ou en continu sur des cuiseurs haute pression comme les échangeurs tubulaires, les échangeurs à plaques ou les « jet-cookers ». Le « jet-cooker » peut comporter un ou plusieurs injecteurs de vapeur, ce qui modifie les temps de cuisson. L'injection de vapeur vive dans le produit assure une dispersion rapide et homogène de la chaleur et des ingrédients. L'échangeur tubulaire nécessite une dispersion homogène de tous les ingrédients avant cuisson, les durées de cuisson sont plus longues et l'intensité moins forte.

Après la cuisson, la matière grasse, l'émulsifiant le ou les agents foisonnants, les arômes, colorants, acides et autres sont ajoutés dans le sirop chaud à une température comprise entre 60 et 90°C, le mélange est ensuite coulé sur une plaque de refroidissement, et on procède à un étirage pendant environ une minute à 50-60 battements. Une fois l'étirage effectué, on procède à la mise en forme et au papillonnage des confiseries obtenues.

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### Exemple 1 : Pâtes à mâcher au sucre selon l'invention

L'objectif est de réaliser des confiseries gélifiées de type pâtes à mâcher contenant du sucre selon la présente invention mais ne contenant plus de gélatine.

Dans cet exemple, des pâtes à mâcher ont été réalisées en incorporant à chaque nouvel essai un des trois composants pour parvenir dans l'essai 5 au mode de réalisation préféré consistant à utiliser un mélange d'amidon waxy prégélatinisé, des fibres solubles et un agent régulateur d'aw.

Le témoin est une recette classique de pâte à mâcher au sucre et contenant de la gélatine. Aucun des essais ne contient de gélatine. La substitution a donc été totale.
L'essai 1 concerne des pâtes à mâcher ne contenant que de l'amidon waxy prégélatinisé.
L'essai 2 concerne des pâtes à mâcher contenant de l'amidon waxy prégélatinisé et des fibres solubles.
L'essai 3 concerne des pâtes à mâcher contenant de l'amidon waxy prégélatinisé et un agent régulateur d'aw.
L'essai 4 concerne des pâtes à mâcher ne contenant ni amidon waxy prégélatinisé ni gélatine mais contenant des fibres solubles et un agent régulateur d'aw.
L'essai 5 concerne des pâtes à mâcher contenant de l'amidon waxy prégélatinisé, des fibres solubles et un agent régulateur d'aw.

### A - Formules

Les formules utilisées pour le témoin et pour les cinq essais sont présentées dans le tableau 1 ci-dessous.

La gomme arabique Instant Gum AA est une gomme purifiée et granulée, soluble instantanément obtenue à partir d'Acacia et commercialisé par la société Nexira, Rouen, France.
Elle est utilisée comme agent émulsifiant et stabilisant car adaptée aux émulsions huile dans l'eau.

La Biscuitine™ 621est une matière grasse végétale hydrogénée, raffinée non laurique possédant un point de fusion de 35°C et commercialisée par la société Loders Croklaan B.V., Wormerveer, pays Bas.
Les sucroesters HLB5 sont des esters de saccharose et d'acides gras obtenus par transestérification d'esters méthyliques et de saccharose, utilisés comme agents émulsifiants non ioniques des matières grasses, et commercialisés par la société Stéarinerie Dubois à Boulogne, France.
L'arôme pomme est commercialisé par la société Symrise AG, Clichy-la-Garenne, France.

### B - Méthode

- Verser l'eau potable froide dans une cuve.
- Introduire sous agitation énergique la gomme arabique, l'amidon waxy prégélatinisé et les fibres solubles.
- Après dispersion et vérification de l'absence de grumeaux, introduire toujours sous agitation le sirop de glucose.
- Puis ajouter l'agent régulateur de l'aw.
- Puis terminer par l'ajout du saccharose.
- Cuire le mélange précédent est à température déterminée et à pression atmosphérique pour obtenir un mélange à 90-94% de matières sèches. Généralement la température de cuisson se situe entre 105 et 120°C. Il est également possible de cuire le précédent mélange sous vide à une pression de - 0,5b. Bien mélanger pendant l'étape de cuisson afin d'éviter que le mélange ne brûle.
- Introduire après l'étape de cuisson la matière grasse (biscuitine) fondue à 50-60°C ou non fondue avec l'émulsifiant (type Sucroester HLB5). Bien mélanger.
- Une fois la masse refroidie en dessous des 80°C, ajouter l'acide citrique, puis l'arôme.
- Pour le témoin contenant de la gélatine, ajouter la gélatine fondue en solution à 60°C après la cuisson du mélange précédent et refroidissement de ce dernier à une température d'environ 80°C.
- Couler la pâte à mâcher sur une table à refroidissement jusqu'à être à une température comprise entre 50 et 60°C.
- Etirer la pâte à mâcher pendant 1 minute (50 à 60 battements) pour obtenir une bonne aération. L'aération peut également être obtenue dans un foisonneur sous pression (1 à 2 bars) dans un procédé de fabrication en continu.
- Laisser la pâte à mâcher aérée au repos pour son refroidissement (entre 45°C et 55°C) et afin qu'elle reprenne de la texture.
- Former, découper et emballer les confiseries.

### C - Tests

Pour ces différents essais, l'activité de l'eau a été mesurée selon la méthode décrite ci-dessus et particulièrement bien connue de l'homme du métier, et les pâtes à mâcher ont été dégustées par un jury entrainé de 10 personnes qui a noté la texture en bouche selon trois paramètres : caractère collant, dureté, élasticité.

Dans certains cas, le temps de mastication, c'est-à-dire le temps mesuré entre l'introduction de la pâte à mâcher dans la cavité buccale jusqu'à son délitement total sous une mastication dite normale, a également été déterminé à l'aide d'un chronomètre.

### D - Analyse

Les cinq essais aboutissent tous à des confiseries possédant une aw inférieure à l'aw du témoin avec gélatine.

Les confiseries témoin présentent une bonne texture élastique. Leur élasticité et leur masticabilité sont conformes aux attentes des dégustateurs concernant ce type de confiserie et leur temps de masticabilité a été de 1 minute 35 secondes.

Les confiseries de l'essai 4 ne contenant pas d'amidon waxy prégélatinisé présente une texture collante et peu élastique. De plus, lorsque le mélange est coulé sur la table de refroidissement, un phénomène de cold flow a été observé. C'est-à-dire que la pâte à mâcher se déforme sans qu'aucune force ne soit appliquée dessus. Du coup, les confiseries de l'essai ont tendance à « couler » et à s'écraser. Ceci est un défaut que les confiseurs cherchent à éviter.

Ceci démontre bien que l'amidon waxy prégélatinisé est absolument nécessaire afin de permettre d'obtenir des confiseries présentant une bonne tenue et une bonne texture.

Les confiseries des essais 1, 2, 3 et 5 présentent quant à elle des textures élastiques tout à fait satisfaisantes par rapport aux attentes des consommateurs. La meilleure des textures est obtenue pour les confiseries contenant le mélange des trois composants, c'est-à-dire l'amidon waxy prégélatinisé, les fibres et l'agent régulateur d'activité de l'eau.

Pour ces 4 essais, les temps de masticabilité ont également été chronométrés et ont été supérieurs à ceux obtenus pour la confiserie témoin. Dans chaque essai, le temps de masticabilité est supérieur à deux minutes et pour l'essai 5, le temps nécessaire pour déguster et avaler la pâte à mâcher est supérieur à 3 minutes.

Pour toutes les confiseries ne contenant pas de gélatine, on observe une excellence permanence de l'élasticité. Cela signifie que les dites confiseries possèdent une excellente tenue en bouche et que l'aspect élastique est maintenu pendant la mastication.

Ceci démontre parfaitement que l'utilisation d'un amidon waxy prégélatinisé pour substituer partiellement ou totalement la gélatine permet d'obtenir des confiseries possédant une très bonne texture élastique, mais également d'en allonger le temps de masticabilité.

Ceci est particulièrement intéressant et pourrait permettre la mise au point d'une nouvelle confiserie à temps de masticabilité allongée qui pourrait se positionner en terme de marketing entre la pâte à mâcher classique et la gomme à mâcher de type chewing-gum qui n'a plus toujours bonne presse en raison des origines des composés de la gomme et également des résidus non biodégradables restant à la fin de la consommation du dit chewing-gum.

### EXEMPLE 2 : Pâtes à mâcher au sucre selon l'invention

L'objectif de ce nouvel exemple est également de réaliser des confiseries gélifiées de type pâtes à mâcher contenant du sucre selon la présente invention mais ne contenant plus de gélatine.

Le témoin est une recette classique de pâte à mâcher au sucre et contenant de la gélatine.

L'essai 1 est une recette de pâte à mâcher au selon la présente invention comprenant de l'amidon waxy prégélatinisé, des fibres solubles et un agent régulateur de l'activité de l'eau.

L'essai 2 est également un essai selon la présente invention avec des teneurs en sirop de glucose et en saccharose différentes de l'essai 1.

### A - Formules

Les formules utilisées pour le témoin et pour les deux essais sont présentées dans le tableau 2 ci-dessous.

### B - Méthode

La méthode de préparation des confiseries selon l'exemple 2 est celle décrite précédemment pour l'exemple 1.

### C - Analyse

Les confiseries témoin présentent une bonne texture élastique. Leur élasticité et leur masticabilité sont conformes aux attentes des dégustateurs concernant ce type de confiserie.

Les deux essais décrivant des confiseries sans gélatine qui contiennent de l'amidon waxy prégélatinisé, des fibres et un agent réducteur d'aw possèdent une très bonne texture élastique supérieure à celle du témoin contenant de la gélatine. A nouveau, on observe une excellence permanence de l'élasticité lors de la consommation des confiseries sans gélatine.

L'intérêt de l'invention est à nouveau démontré dans cet exemple.

### EXEMPLE 3 : Pâtes à mâcher sans sucre (pas selon l'invention)

L'objectif est de réaliser des confiseries gélifiées sans sucre de type pâtes à mâcher et ne contenant plus de gélatine selon la présente invention. A chaque fois, les pâtes à mâcher réalisées ne contiennent que de l'amidon waxy prégélatinisé. L'ajout optionnel de fibres et/ou d'un agent régulateur d'aw n'est pas représenté dans cet exemple.

Le témoin est une recette classique de pâte à mâcher contenant de la gélatine et de la gomme arabique
L'essai 1 concerne des confiseries ne contenant plus de gélatine, substituée par de l'amidon waxy prégélatinisé et par de la gomme arabique.
L'essai 2 concerne des confiseries ne contenant plus de gélatine, substituée par de l'amidon waxy prégélatinisé uniquement.

### A - Formules

Les formules utilisées pour le témoin et pour les deux essais sont présentées dans le tableau 3 ci-dessous.

### B- Méthode

La méthode de préparation des confiseries selon l'exemple 3 est celle décrite précédemment pour l'exemple 1, à la différence près que la température de cuisson est plus élevée et se situe pour les trois essais aux alentours des 130°C.

### C - Analyse

Les confiseries témoin présentent une bonne texture élastique. Leur élasticité et leur masticabilité sont conformes aux attentes des dégustateurs concernant ce type de confiserie.

Les deux essais décrivant des confiseries sans sucre et sans gélatine qui contiennent de l'amidon waxy prégélatinisé et dans un cas également de la gomme arabique possèdent une très bonne texture élastique supérieure à celle du témoin contenant de la gélatine. A nouveau les temps de masticabilité ont été allongés.

Ceci démontre parfaitement que l'utilisation d'un amidon waxy prégélatinisé pour substituer partiellement ou totalement la gélatine permet d'obtenir des confiseries sans sucre possédant une très bonne texture élastique, mais également d'en allonger le temps de masticabilité. La permanence de l'élasticité s'observe également pour ces confiseries réalisées sans sucre et sans gélatine.

La présence de gomme arabique ou non n'a pas une incidence significative sur les qualités finales de la confiserie.

Ceci démontre également que l'utilisation d'un amidon waxy prégélatinisé permettrait d'une part de pouvoir substituer partiellement ou totalement la gélatine mais également la gomme arabique qu'il peut parfois subsister dans les confiseries. L'intérêt est donc double.

### EXEMPLE 4 : Pâtes à mâcher sans sucre ajouté et riches en fibres selon l'invention

L'objectif de ce nouvel exemple est de réaliser des confiseries gélifiées de type pâtes à mâcher ne contenant pas de sucre ajouté et enrichies en fibres contenant de l'amidon waxy prégélatinisé en substitution totale de la gélatine initialement contenue dans les confiseries.

Le témoin est une recette de pâte à mâcher sans sucre ajouté, enrichie en fibres et contenant de la gélatine.

### A- Formules

Les formules utilisées pour le témoin et pour l'essai sont présentées dans le tableau 4 ci-dessous.

### B - Méthode

- Introduire et disperser le NUTRIOSE® FB06, le mannitol 60, l'amidon waxy Prégéflo C100, l'acide citrique et l'acésulfame K dans l'eau. Cela constitue la partie A.
- Cuire le mélange précédent à une température de cuisson de 110°C. Il est important de chauffer doucement pour atteindre 110°C (avec une pression de vapeur de 2,5 maximum) tout en remuant constamment afin d'éviter que le mélange ne brûle.
- Mélanger la matière grasse (biscuitine) fondue à 50-60°C, avec la glycérine et l'émulsifiant (type Sucroester HLB5). C'est la partie B.
- Ajouter la partie B à la partie A dès la cuisson terminée.
- Mélanger l'ensemble dans un mixeur jusqu'à complète homogénéisation.
- Une fois la masse refroidie en dessous des 80°C, ajouter la solution de gélatine (pour le témoin) et les arômes.
- Couler la pâte à mâcher sur une table à refroidissement et procéder à son étirement pendant une minute (60 battements).
- Laisser la pâte à mâcher aérée au repos pour son refroidissement (entre 45°C et 55°C) et afin qu'elle reprenne de la texture.
- Former, couper et emballer les confiseries ainsi obtenues.

### C - Analyse

Au niveau de la composition, les confiseries obtenues sont sans sucre et sont donc potentiellement bonnes pour les dents car n'induisant pas de caries..

De plus, elles contiennent plus de 45g pour 100g de confiseries de fibres et peuvent donc être vendues avec l'appellation « riches en fibres » (ou « excellente source de fibres »).

Au niveau de la texture, le jury de 10 personnes a jugé les confiseries de l'essai 1 comme étant identiques à celles du témoin au niveau de la texture et de la masticabilité. Ceci démontre donc que la gélatine peut être totalement substituée par de l'amidon waxy prégélatinisé selon la présente invention et sans avoir d'impact négatif sur la texture finale de la confiserie.

Une très bonne permanence de l'élasticité est également observée dans cet exemple.

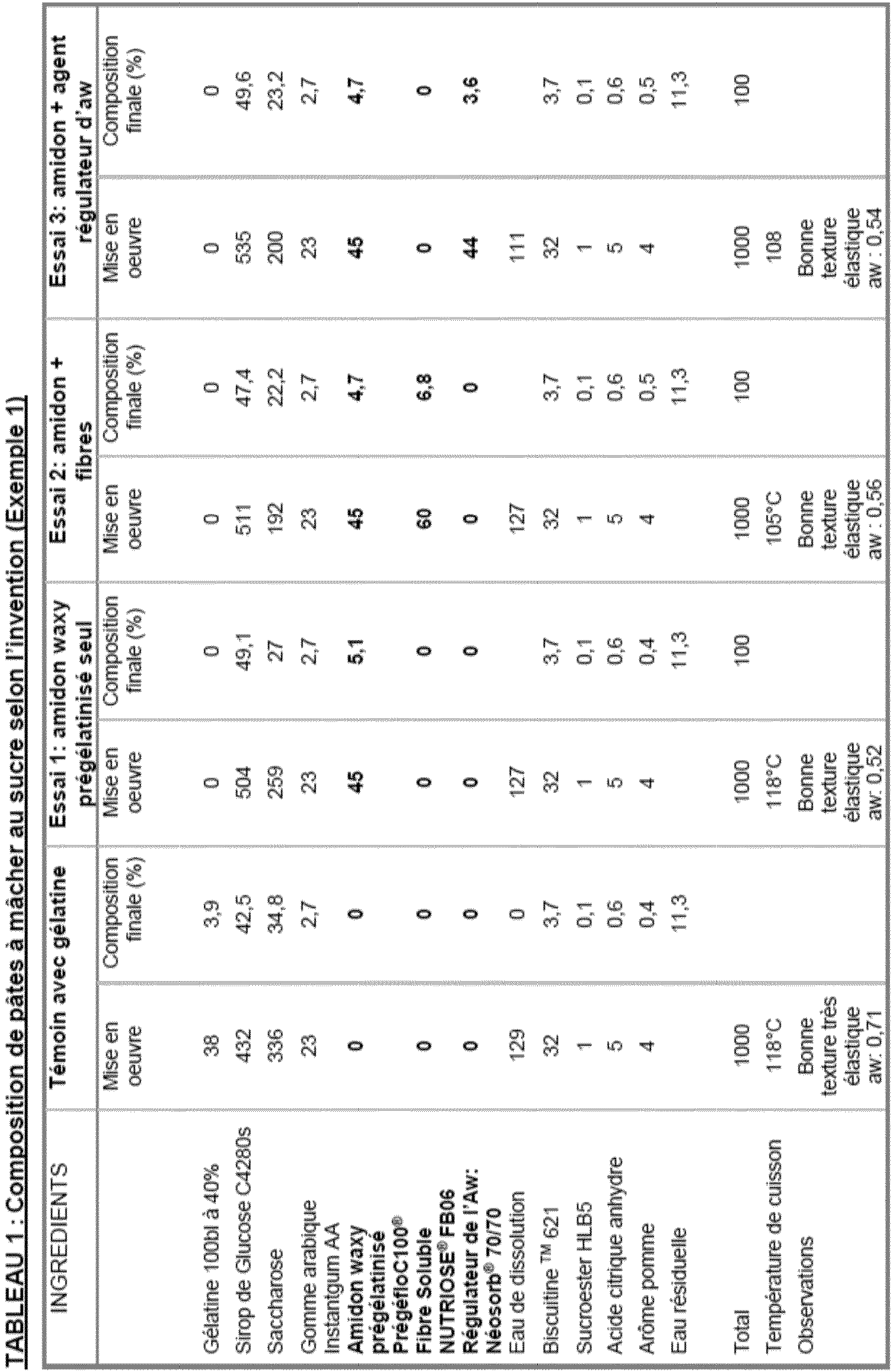

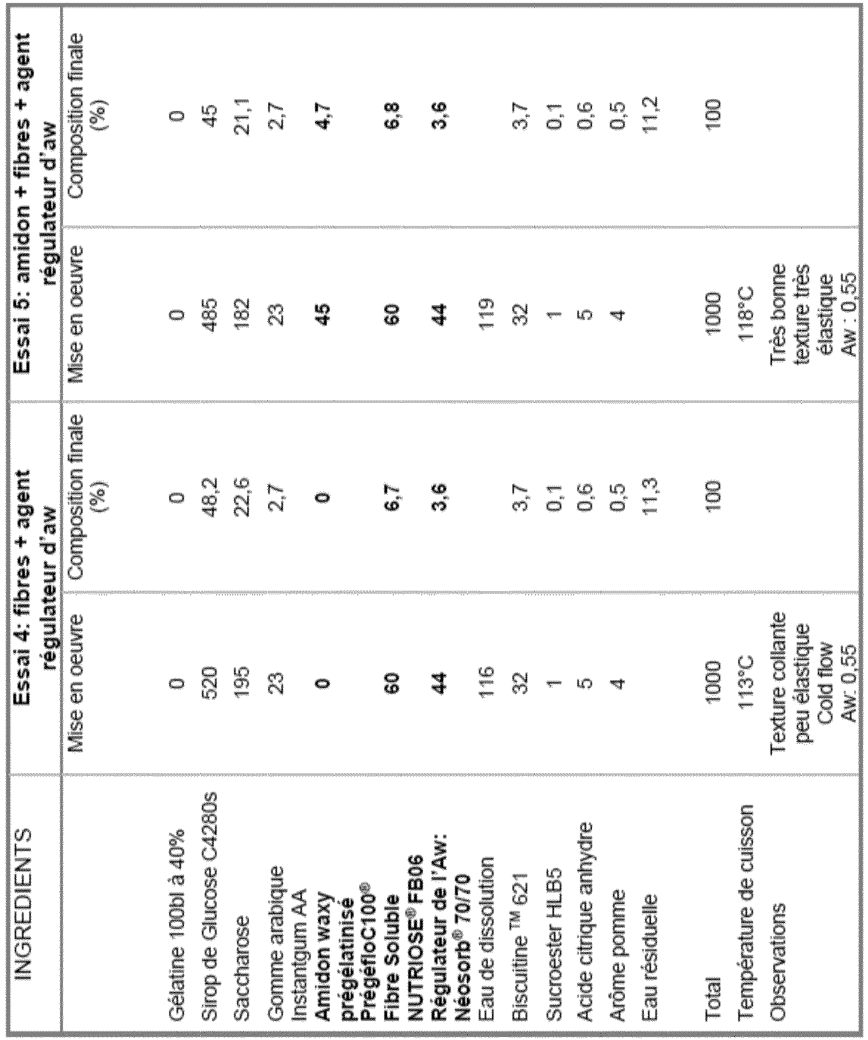

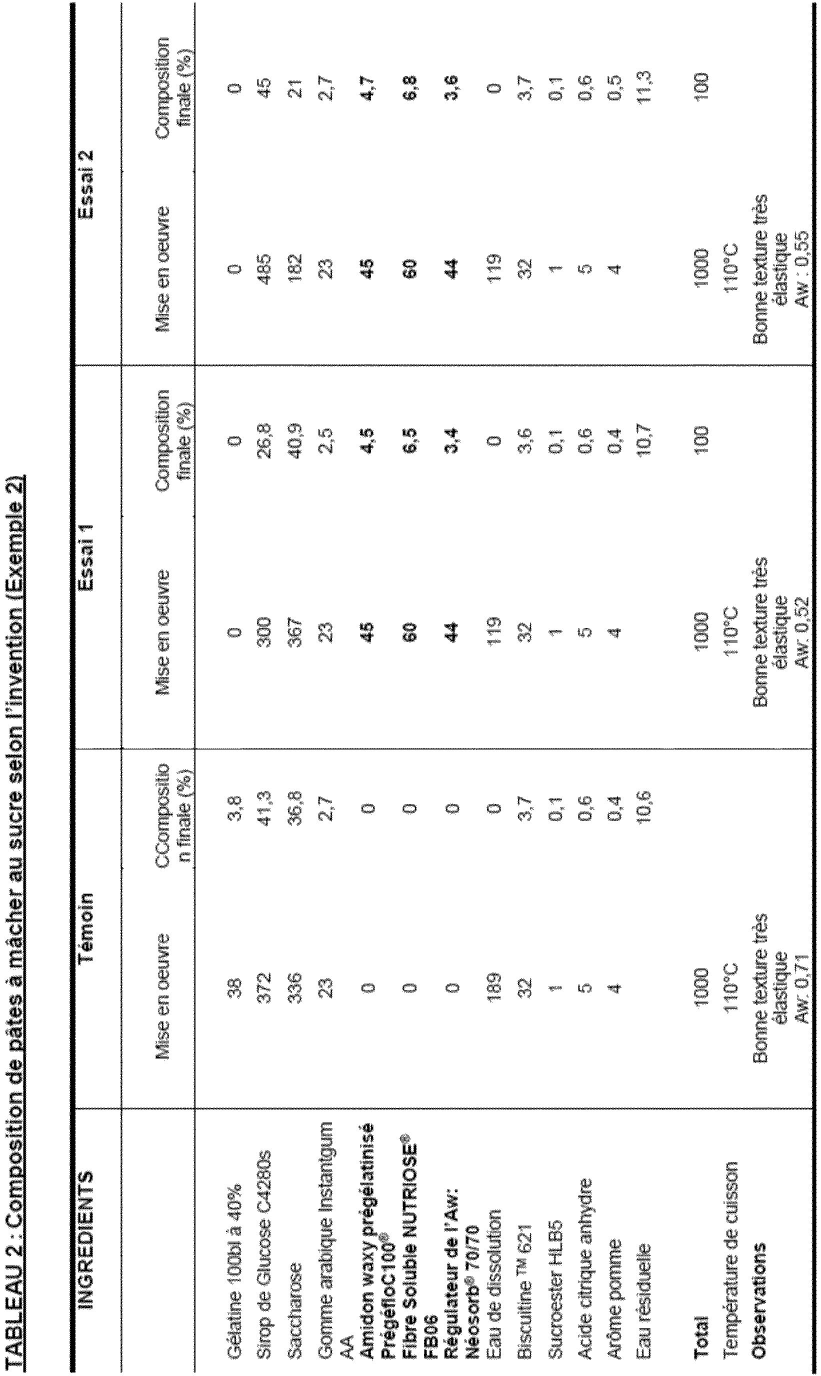

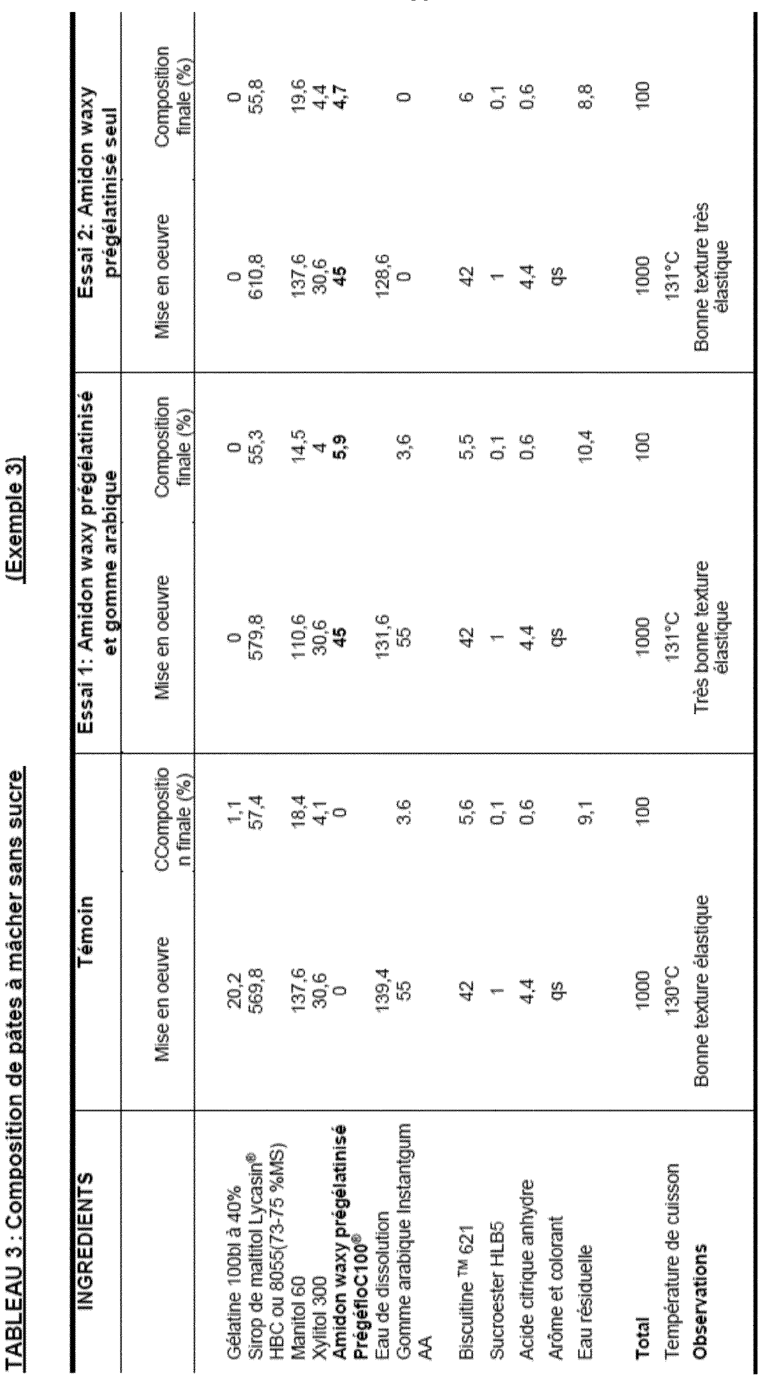

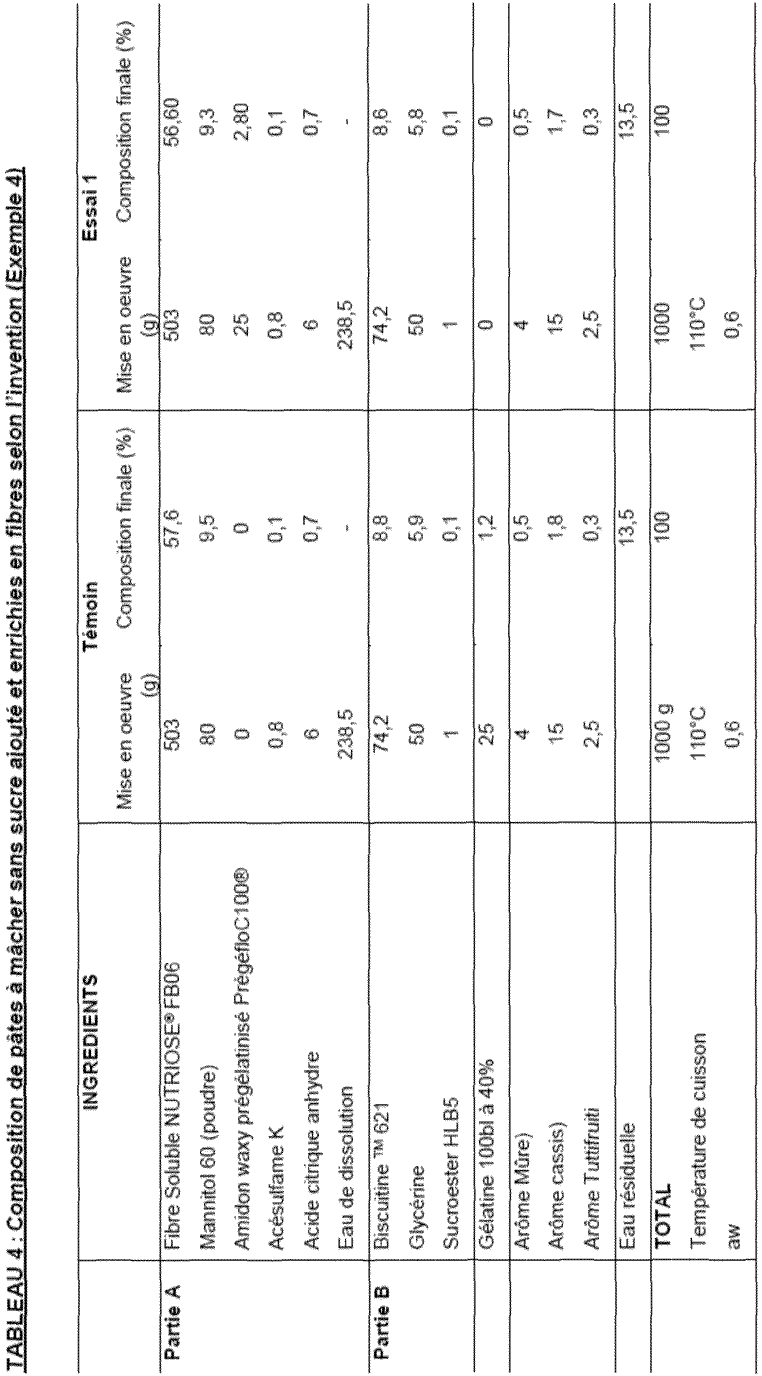

## Revendications

1. Confiserie gélifiée comprenant :
- de 0,1% à 25% d'amidon waxy prégélatinisé, de préférence de 2% à 10%, de façon encore plus préférée 4% à 8%,
- de 0,1% à 10%, de préférence de 2% à 10% de maltodextrines branchées,
les pourcentages étant exprimés en poids par rapport au poids total de la confiserie.

2. Confiserie selon la revendication 1, **caractérisée en ce qu'**elle est exempte de gélatine et/ou qu'elle est sans sucre.

3. Confiserie selon la revendication 2 **caractérisée en ce qu'**elle comprend de 4% à 8% de maltodextrines branchées, les pourcentages étant exprimés en poids par rapport au poids total de la confiserie.

4. Confiserie selon l'une quelconque des revendications 1 à 3, **caractérisée en ce qu'**elle comprend un agent régulateur ou dépresseur d'activité de l'eau choisi parmi le sorbitol, la glycérine et leurs mélanges quelconques.

5. Confiserie selon la revendication 4, **caractérisée en ce qu'**elle comprend de 0,1% à 15% d'un agent régulateur ou dépresseur d'activité de l'eau, de préférence de 1% à 8%, de façon encore plus préférée 2% à 6%, les pourcentages étant exprimés en poids par rapport au poids total de la confiserie.

6. Confiserie selon l'une quelconque des revendications 1 à 5, **caractérisée en ce qu'**elle comprend un mélange d'un amidon waxy prégélatinisé, de maltodextrines branchées et d'un agent régulateur ou dépresseur d'activité de l'eau choisi parmi le sorbitol, la glycérine et leurs mélanges quelconques.

7. Confiserie selon la revendication 6, **caractérisée en ce qu'**elle comprend un mélange de :
- 0,1% à 25%, de préférence de 2% à 10%, de façon encore plus préférée 4% à 8% d'un amidon waxy prégélatinisé, et de
- 0,1% à 10% de maltodextrines branchées, de préférence de 2% à 10%, de façon encore plus préférée 4% à 8%, et de
- 0,1% à 15% d'un agent régulateur ou dépresseur d'activité de l'eau choisi parmi le sorbitol, la glycérine et leurs mélanges quelconques, de préférence de 1% à 8% de sorbitol.

8. Procédé de préparation de confiseries gélifiées telles que définies à la revendication 1 **caractérisé en ce qu'**il comprend les étapes de :
- préparation d'un mélange comprenant 0,1% à 25%, de préférence de 2% à 10%, de façon encore plus préférée 4% à 8% d'un amidon waxy prégélatinisé, et de 0,1% à 10% de maltodextrines branchées et de 0,1% à 15% d'un agent régulateur ou dépresseur d'activité de l'eau choisi parmi le sorbitol, la glycérine et leurs mélanges quelconques, au moins un édulcorant excepté le sorbitol, et de l'eau,
- cuisson du mélange à une température comprise entre 100°C et 150°C jusqu'à l'obtention de la matière sèche voulue,
- mise en forme du mélange cuit de manière à obtenir des confiseries de type gélifié,
- récupération des confiseries gélifiées ainsi obtenues.

## Patentansprüche

1. Gelierte Süßigkeit, umfassend:
- 0,1 % bis 25 % vorgelierte Wachsstärke, bevorzugt 2 % bis 10 %, stärker bevorzugt 4 % bis 8 %,
- 0,1 % bis 10 %, bevorzugt 2 % bis 10 % verzweigte Maltodextrine, wobei die Prozentsätze in Gewichtsprozent, bezogen auf das Gesamtgewicht der Süßigkeit, angegeben sind.

2. Süßigkeit nach Anspruch 1, **dadurch gekennzeichnet, dass** sie gelatinefrei und/oder zuckerfrei ist.

3. Süßigkeit nach Anspruch 2, **dadurch gekennzeichnet, dass** sie 4 % bis 8 % verzweigte Maltodextrine umfasst, wobei die Prozentsätze in Gewichtsprozent, bezogen auf das Gesamtgewicht der Süßigkeit, angegeben sind.

4. Süßigkeit nach einem der Ansprüche 1 bis 3, **dadurch gekennzeichnet, dass** sie ein die Wasseraktivität regulierendes oder hemmendes Mittel umfasst, gewählt aus Sorbit, Glycerin und beliebigen Mischungen davon.

5. Süßigkeit nach Anspruch 4, **dadurch gekennzeichnet, dass** sie 0,1 % bis 15 %, bevorzugt 1 % bis 8 %, stärker bevorzugt 2 % bis 6 %, eines die Wasseraktivität regulierenden oder hemmenden Mittels umfasst, wobei die Prozentsätze in Gewichtsprozent bezogen auf das Gesamtgewicht der Süßigkeit angegeben sind.

6. Süßigkeit nach einem der Ansprüche 1 bis 5, **dadurch gekennzeichnet, dass** sie eine Mischung aus einer vorgelierten Wachsstärke, verzweigten Maltodextrinen und einem die Wasseraktivität regulierenden oder hemmenden Mittel umfasst, gewählt aus Sorbit, Glycerin und beliebigen Mischungen davon.

7. Süßigkeit nach Anspruch 6, **dadurch gekennzeichnet, dass** sie eine Mischung umfasst, aus:
- 0,1 % bis 25 %, bevorzugt 2 % bis 10 %, stärker bevorzugt 4 % bis 8 % einer vorgelierten Wachsstärke, und
- 0,1 % bis 10 %, bevorzugt 2 % bis 10 %, stärker bevorzugt 4 % bis 8 % verzweigte Maltodextrine, und
- 0,1 % bis 15 % eines die Wasseraktivität regulierenden oder hemmenden Mittels, gewählt aus Sorbit, Glycerin und beliebigen Mischungen davon, bevorzugt 1 % bis 8 % Sorbit.

8. Verfahren zur Herstellung von gelierten Süßwaren nach Anspruch 1, **dadurch gekennzeichnet, dass** es die folgenden Schritte umfasst:
- Herstellung einer Mischung, umfassend 0,1 % bis 25 %, bevorzugt 2 % bis 10 %, stärker bevorzugt 4 % bis 8 % einer vorgelierten Wachsstärke, und 0,1 % bis 10 % verzweigte Maltodextrine und 0,1 % bis 15 % eines die Wasseraktivität regulierenden oder hemmenden Mittels, gewählt aus Sorbit, Glycerin und beliebigen Mischungen davon, mindestens einen Süßstoff mit Ausnahme von Sorbit, sowie Wasser,
- Kochen der Mischung bei einer Temperatur zwischen 100 und 150 °C, bis die gewünschte Trockensubstanz erhalten ist,
- Formen der gekochten Mischung zum Erhalt von Süßwaren vom gelierten Typ,
- Gewinnen der so erhaltenen gelierten Süßwaren.

## Claims

1. A jelly confectionery comprising:
- from 0.1% to 25% of pregelatinized waxy starch, preferably from 2% to 10%, even more preferably 4% to 8%,
- from 0.1% to 10%, preferably of 2% to 10% of branched maltodextrins,
the percentages being expressed by weight relative to the total weight of the confectionery.

2. The confectionery as claimed in claim 1, **characterized in that** it is gelatin-free and/or sugar-free.

3. The confectionery as claimed in claim 2, **characterized in that** it comprises from 4% to 8% of branched maltodextrins, the percentages being expressed by weight relative to the total weight of the confectionery.

4. The confectionery as claimed in any one of claims 1 to 3, **characterized in that** it comprises a water activity regulating agent or depressant chosen from sorbitol, glycerol and any mixtures thereof.

5. The confectionery as claimed in claim 4, **characterized in that** it comprises from 0.1% to 15% of a water activity regulating agent or depressant, preferably from 1% to 8%, even more preferably 2% to 6%, the percentages being expressed by weight relative to the total weight of the confectionery.

6. The confectionery as claimed in any one of claims 1 to 5, **characterized in that** it comprises a mixture of a pregelatinized waxy starch, branched maltodextrins and a water activity regulating agent or depressant chosen from sorbitol, glycerol and any mixtures thereof.

7. The confectionery as claimed in claim 6, **characterized in that** it comprises a mixture of:
- 0.1% to 25%, preferably of 2% to10%, even more preferably 4% to 8% of a pregelatinized waxy starch, and of
- 0.1% to 10% of branched maltodextrins, preferably 2% to 10%, even more preferably 4% to 8%, and of
- 0.1% to 15% of a water activity regulating agent or depressant chosen from sorbitol, glycerol and any mixtures thereof, preferably of 1% to 8% of sorbitol.

8. A process for preparing jelly confectioneries as defined in claim 1, **characterized in that** it comprises the steps of:
- preparing a mixture comprising from 0.1% to 25%, preferably from 2% to 10%, even more preferably from 4% to 8% of a pregelatinized waxy starch, and from 0.1% to 10% of branched maltodextrins and from 0.1% to 15% of a water activity regulating agent or depressant chosen from sorbitol, glycerol and any mixtures thereof, at least one sweetener excepted sorbitol, and water,
- cooking the mixture at a temperature of between 100°C and 150°C until the desired solids content is obtained,
- shaping the cooked mixture so as to obtain confectioneries of jelly type,
- recovering the jelly confectioneries thus obtained.
